# EUROPEAN PATENT APPLICATION

(11) **EP 2 378 416 A1**
(43) Date of publication of application: **19.10.2011**
(21) Application number: 10004075.7
(22) Date of filing: 16.04.2010
(51) Int. Cl.: G06F 9/445

(54) **System and a method for updating an operating system image**

(71) Applicant: Siemens Aktiengesellschaft, 80333 München (DE)
(72) Inventor: Bhadauria, Abhinandan, Jagdish Nagar 560093 Bangalore (IN); Gaja, Ravi, Sankar, BTM 2nd stage 560076 Bangalore (IN)

(57) **Abstract**

A system (2) for updating an operating system image, includes a client device (4) using a current image version of the operating system image (6) and adapted for sending an information (8) about said current image version (6) to a boot server (12), a database (10) adapted to store information (14) about different image versions of said operating system image (12) used by said client device (4), and said boot server (12) adapted to access said database (10) to retrieve an information (14) about said different versions of said operating system image (12), to compare the information (8) about the current version (6) and the information (14) about the different versions (12) for determining an updated image version of said operating system (6, 12) for said client device (4). The client device (4) sends the information (8) about the current version of the operating system image (6) embedded in a Dynamic Host Configuration Protocol (DHCP) option packet (28).

## Description

A system and a method for updating an operating system image

The invention relates to a system and a method for updating an operating system image

A client device using a current version of an operating system image requires updating of the operating system image regularly with latest updates in features of the operating system image.

An updated operating system image contains updates about new additions in the features of the current operating system image based on the needs of the client device, a network to which the client device is connected, and bugs in the current operating system image.

One possible way to update the operating system image is by using a Pre-boot Execution Environment (PXE) Protocol. According to the PXE Protocol, the client device initiates the PXE protocol by broadcasting a DHCPDISCOVER information containing an extension that identifies location of the client device. After several intermediate steps, a DHCP server sends the client device a list of appropriate Boot Servers from where the client device can upload a current operating system image. In furtherance, the client device discovers the Boot Server and receives the updated operating system image from the boot server. While updating the operating system image, a lot of human effort and intervention is required for tracking a latest version of the operating system image which make task of updating the operating system image time consuming and human intensive.

The object of the invention is to update an operating system image easily and automatically.

According to an embodiment, a system for updating an operating system image includes a client device using a current image version of the operating system image and adapted for sending an information about said current image version to a boot server, a database adapted to store information about different image versions of said operating system image used by said client device, and said boot server adapted to access said database to retrieve an information about said different versions of said operating system image, to compare the information about the current version and the information about the different versions for determining an updated image version of said operating system image for said client device. On the basis of the boot information, the client device downloads the operating system image automatically.

According to an exemplary embodiment, wherein the information about the current version of the operating system image includes an image version identifier for the current version and the information about the different image versions of the operating system image comprises an image version identifier for said operating system image version, wherein the boot server is adapted to compare the information by comparing the image versions identifiers. This helps the boot server to objectively compare the information about the current version and the information about the different versions, so that the boot server can determine the updated version of the operating system image uniquely.

According to another embodiment, wherein the boot server is adapted to determine and send one of the different versions of the operating system image stored in the boot server as the updated version of the operating system image if said comparison results in a mismatch and the image identifier for the different versions of the operating system image is greater than the image version identifier of the current version, or to determine the current version of the operating system image as the updated version and sends a boot information to the client device to download from the current version of the operating system image stored inside the client device if said comparison results in a match or the image identifier of the current version of the operating system image is greater than the image identifier of the different versions of the operating system image. Such a system, directs the client device to download latest available operating system image as the updated version available within the system to enhance and stabilize functioning of the client device.

According to yet another embodiment, wherein the information about the current version of the operating system image further includes a working status information about the current version. Such information will make aware the boot server whether the current version of the operating system image is functional or not, so that the boot server can take immediate action to provide an operating system image to make the client device function properly.

According to any exemplary embodiment, wherein said boot server is further adapted to determine the updated image version of said operating system image for said client by checking the working status of the current version and if said checking results in either a non-working current version operating system image, or absence of said current version operating system image, than comparing the information of the current version to the information of the different versions. This helps to provide an updated operating system image from the boot server to the client device if the client device is non-functional due to absence of or non-working current operating system image.

According to one embodiment, wherein the boot server compares the information by comparing the image identifiers of current version to the image identifier of the different versions to determine and send one of the different versions of the operating system image whose image identifier is either equal to the image identifier of the current version or whose image identifier is greatest among the image identifiers of the different versions. This helps to objectively determine the updated operating system image, so that to provide the client device with an unique and the latest version of the operating system image from the boot server if the client device is non-functional due to absence or non-working current version of the operating system image.

According to yet another embodiment, wherein the client device sends the information about the current version of the operating system image embedded into a Dynamic Host Configuration Protocol (DHCP) option packet. In this case the system uses a Pre-boot Execution Environment (PXE) protocol. This helps to save human efforts by using the pre-existing PXE protocol and makes implementation of the system cost effective.
FIG 1 shows a schematic diagram of a system having a client device, an boot server, a database and a boot server interacting with each other to update an operating system image used by the client device.
FIG 2 shows a tabular representation of information about different image versions of the operating system image used by the client device stored in the database.

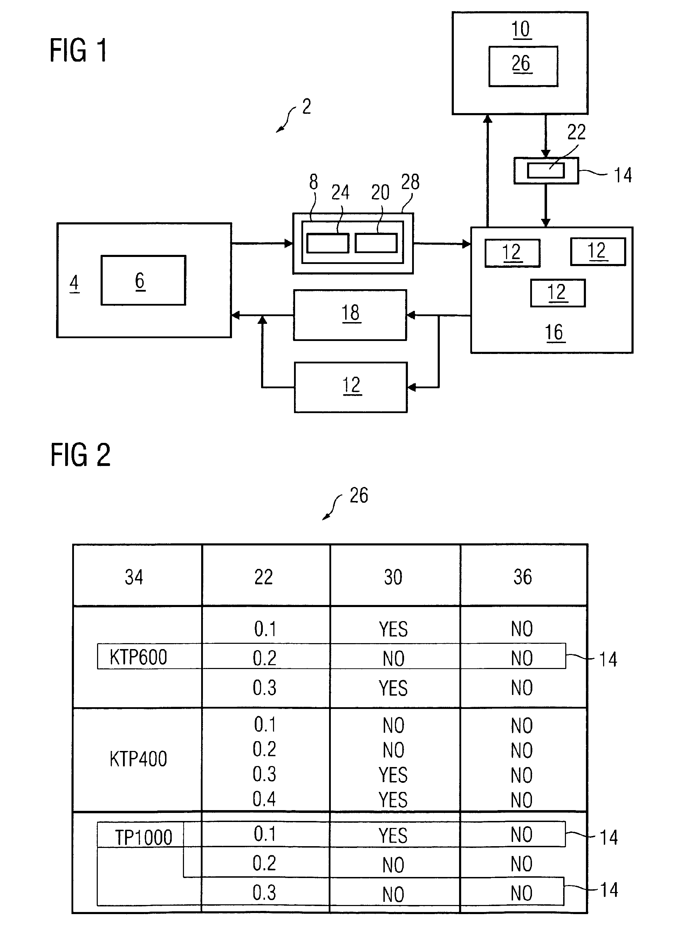

FIG 1 illustrates the system 2 having a client device 4, a boot server 16 and a database 10, wherein the boot server 16 and the client device 4 interacts with each other to determine an updated version of the operating system image 6, 12 to be used by the client device 4. On the basis of determination either the boot server 16 sends one of different versions of the operating system image 12 from the boot server 16 or sends a boot information 18 to download a current version of the operating system image 6 from the client device 4 currently used by said client device 4.

The client device 4 is using the current version of the operating system image 6 and generates the information 8 about the current version of the operating system image 6 used by the client device 4 . The client device 4 sends the information 8 about the current version of the operating system image 6 to the boot server 16 on regular intervals, like after a time stamp, or on switching on the client device 4, or on switching off the client device 4, or on getting infected the current version of the operating system image 6 by a bug, or any such instant based intervals or predetermined regular intervals, or a combination thereof. Alternatively, the client device 4 can be any general purpose processor which can generate the information 8 about the current version of the operating system image 6 and can send the information 8 to the boot server 16.

The information 8 about the current version 6 includes an image version identifier 24 of the current version 6 and a working status 20 indicating about functional status of the current version 6. Alternatively, the information 8 need not include the working status 20. Yet alternatively the information 8 can also include a client device identifier, or a location of the client device, or any such information referring to a configuration of the current version 6 or client device, or a combination thereof. The reference to the working status 20 can be made by using remarks like "INVALID", "NO", etc if the operating system image 6 are not working, and "VALID", "YES", etc, if the operating system image 6 are working.

The boot server 16 on receiving the information 8 about the current version of the operating system image 6, accesses the database 10 to retrieve an information 14 about different versions of the operating system image 12 stored in the database. The information 14 about the different versions 12 includes an image identifier 22 in respect to each of the different versions 12. Alternatively, the information 14 can also include a client device identifier, or a location of the client device, or any such information referring to a configuration of the different version 12 or client device, or a combination thereof.

The image version identifier 22, 24 of the operating system images 6, 12 can be a number, or an alphanumeric value, or any such identifier which can distinguish between various versions of operating system images 6, 12.

In furtherance, the boot server 16 compares the information 8 of the current version 14 and the information 14 of the different version 12 by comparing the image identifier 24 and the image identifiers 22. Each of the image identifiers 22 is compared to the image identifier 14 to determine the update version of the operating system image (6, 12). On a basis of the comparison, the boot sever is adapted to determine and send one of the different versions of the operating system image 12 stored in the boot server 16 as the updated version of the operating system image 6, 12 if said comparison results in a mismatch and the image identifier 22 of the different operating system image 12 is greater than the image version identifier 24 of the current version 6, or to determine the current version of the operating system image 6 as the updated version 6, 12 and send a boot information 18 to the client device to download the current version of the operating system image 6 stored inside the client device 4 if said comparison results in a match or the image identifier 24 of the current operating system image 6 is greater than the image identifier 22 of the different versions of the operating system image 12. Yet alternatively, any generally available servers having a functionality to receive information requests and process the information request, can function as an boot server 16 to receive the information 8, determine the updated operating system image 6, 12 by checking the working status 20 or by comparing the information 8, 14 and to send one of the different versions of the operating system image 12 or the boot information 18. Before comparing the information 8, 14, the boot server 16 checks the working status 20 of the current version 6 and if said checking results in either a non-working current version operating system image, or absence of said current version operating system image 6, than the boot server 16 compares the information 8 of the current version 6 and the information 14 of the different versions 12 by comparing image identifiers 24 of current version 6 to the image identifier 22 of the different versions 12 to determine and send one of the different versions of the operating system image 12 whose image identifier 22 is either equal to the image identifier 24 of the current version 6 or whose image identifier 22 is greatest among the image identifiers 22 of the different versions. Alternatively, the boot server 16 need not check the working status 20 rather the boot server 16 can only compare the information 8, 14 to determine the updated version of the operating system image 6, 12.

The client device 4 receives either an updated version of the operating system image 6, 12 as one of the different versions 14 from the boot server 16 or a boot information 18 from the boot server 16 indicating for booting the updated version 6, 12 by booting from the current version of the operating system image used by the client as the updated version 6, 12. Alternatively, the client device 4 can only receive the different version of the operating system image 14 as the updated version 6, 12 and need not receive the boot information 18.

The database 10 is an organized collection 26 of the information 14 about the different image versions of the operating system image 12 from the client device 4. The database 10 provides access to the boot server 16 to retrieve the information 14 about the different versions 12. Alternatively, the database 10 can have the different image versions of the operating system images 12 from a plurality of client device 4. The database 10 is any generally available database 10 like Microsoft SQL, MYSQL or any such databases which can store the information 14 about the different image versions of the operating system image 12.

The updated image version 6, 12 determined by the boot server 16 can be the current version of the operating system image 6, or one of the different versions of the operating system image 12 stored in the boot server 10 on the basis of checking of the working status 20 of the current operating system image 6 or the comparison of the information 8, 14.

The client device 4, the boot server 16 and the boot server 26 can be connected to each other over a data communication network like a computer network, a telephony network or any other such data communication which can allow data communication between the client sever, the boot server 16 and the boot server 26 to communicate and transfer data between each of them.

The system uses a Preboot Execution Environment (PXE) protocol to establish and manage communication between the client device 4 and the boot server 16, wherein the boot server is the PXE server which accesses the database to retrieve the information 14 about the different versions 12. On connecting to the network, the client device 4 broadcasts a DHCPDISCOVER information containing an extension that identifies the request as coming from the client device 4 to a Dynamic Host Configuration Protocol (DHCP) server. On a basis of the DHCPDISCOVER information, the DHCP server assigns a Internet Protocol (IP) address to the client device and communicate the IP address to the client device 4 as well as the boot server 16. In furtherance, the client device 4 establishes a connection between the boot server 16 based on the knowledge of IP address and sends a DHCP option packet information 28 having embedded the information 8 about the current operating system image 6. On receiving the DHCP option packet information 28, the boot server 16 processes the DHCP option packet information 28 to extract the information 8 about the current version of the operating system image 6 being used by the client device 4. The boot server further accesses the database 10 to retrieve the information 14 about the different versions of the operating system image 12 and compares compare the information 8 about the current version 6 and the information 14 about the different versions 12 for determining an updated image version of said operating system 6, 12 for said client device 4.

FIG 2 illustrates the organized collection 26 of the information 14 about the different image versions of the operating system image 12 from a plurality of client devices 4 as a tabular representation. The information 14 about the different image versions of the operating system image 12 includes an unique identifier 36 for each of the client device 4, the image version identifier 22 of the different image versions of the operating system image 12, a working status 30 of the different image versions of the operating system image 12 and a force status 38 indicating force assertion over each of said different versions of the operating system image 12. Alternatively, the information 14 about the different image versions of the operating system image 12 may only contain the unique identifier 36 for the client device 4, or the image version identifier 22 of each of the different image versions of the operating system image 12 or the working status 30 of each of the different versions of the operating system image stored in the database the force status 38 indicating force assertion over each of said different versions of the operating system image 12 stored in the database 10 or any other such information indicating about the functionality, identifier and features of the different image versions of the operating system image 12, or any combination thereof.

The working status 30 indicates regarding a functional status the different image versions of the operating system image 12 respectively. The reference to the flags 30 can be made by using remarks like "INVALID", "NO", etc if the operating system images 12 are not working, and "VALID", "YES", etc, if the operating system images 12 are working.

The unique identifier 34 for the client device can be any identifier which can uniquely identify the client device 4, like a number, an alphanumeric value, radio frequency identifier or any such unique identifiers or combination thereof.

The information about the force status 36 can be represented by any binary representations like "NO" and "YES", or "0" and "1", "TRUE" and "FALSE", or any such representations which can indicate whether the client device 4 had forcefully booted the different image versions of the operating system image 12 or not.

## Claims

1. A system (2) for updating an operating system image, comprising:
- a client device (4) using a current image version of the operating system image (6) and adapted for sending an information (8) about said current image version (6) to a boot server (12),
- a database (10) adapted to store information (14) about different image versions of said operating system image (12) used by said client device (4), and
- said boot server (12) adapted to access said database (10) to retrieve an information (14) about said different versions of said operating system image (12), to compare the information (8) about the current version (6) and the information (14) about the different versions (12) for determining an updated image version of said operating system (6, 12) for said client device (4).

2. The system (2) according to claim 1, wherein the information (8) about the current version of the operating system image (6) comprises an image version identifier (24) for the current version (6) and the information (14) about the different image versions of the operating system image (12) comprises an image version identifier (22) for said operating system image version (12), wherein the boot server is adapted to compare the information (8, 14) by comparing the image versions identifiers (22, 24).

3. The system (2) according to claim 2, wherein the boot server (16) is adapted
- to determine and send one of the different versions of the operating system image (12) stored in the boot server (16) as the updated version of the operating system image (6, 12) if said comparison results in a mismatch and the image identifier (22) for the different versions of the operating system image (12) is greater than the image version identifier (24) of the current version (6), or
- to determine the current version of the operating system image (6) as the updated version (6, 12) and sends a boot information (18) to the client device (4) to download from the current version of the operating system image (6) stored inside the client device (4) if said comparison results in a match or the image identifier (24) of the current version of the operating system image (6) is greater than the image identifier (22) of the different versions of the operating system image (12).

4. The system (2) according to any of the preceding claims, wherein the information (8) about the current version of the operating system (6) further comprises a working status information (20) about the current version (6).

5. The system (2) according to the claim 4, wherein said boot server (16) is further adapted to determine the updated image version of said operating system image (6, 12) for said client by checking the working status (20) of the current version (6) and if said checking results in either a non-working current version operating system image, or absence of said current version operating system image (6), than comparing the information (8) of the current version (6) to the information (14) of the different versions (12).

6. The system (2) according to claim 5, wherein the system (2) compares the information (8, 14) by comparing the image identifiers (24) of current version (6) to the image identifier (22) of the different versions to determine and send one of the different versions of the operating system image (12) whose image identifier (22) is either equal to the image identifier (24) of the current version (6) or whose image identifier (22) is greatest among the image identifiers (24) of the different versions (12).

7. The system (2) according to any of the preceding claims, wherein the client device (4) sends the information (8) about the current version of the operating system image (6) embedded into a Dynamic Host Configuration Protocol (DHCP) option packet (28).

8. A method for updating an operating system image comprises:
- sending an information (8) about a current image version (6) by a client device (4) to a boot server (12), wherein the current version (8) is being used by the client device (4),
- store information (14) about different image versions of said operating system image (12) inside a database (10), wherein the different versions (12) were used by said client device (4),
- accessing said database (10) by the boot server (16) to retrieve an information (14) about said different versions of said operating system image (12), and
- comparing the information (8) about the current version (6) and the information (14) about the different versions (12) by the boot server (16) for determining an updated image version of said operating system (6, 12) for said client device (4).

9. The method according to the claim 8,
- wherein the information (8) about the current version of the operating system image (6) comprises an image version identifier (24) for the current version (6) and the information (14) about the different image versions of the operating system image (12) comprises an image version identifier (22) for said operating system image version (12), and
- wherein comparing the information (8, 14) by comparing the image versions identifiers (22, 24).

10. The method according to the claim 9, on a basis of the comparison
- determining and sending one of the different versions of the operating system image (12) stored in the boot server (16) as the updated version of the operating system image (6, 12) by the boot server (16) if said comparison results in a mismatch and the image identifier (22) for the different versions of the operating system image (12) is greater than the image version identifier (24) of the current version (6), or
- determining the current version of the operating system image (6) as the updated version (6, 12) and sending a boot information (18) by the boot server (16) to the client device (4) to download from the current version of the operating system image (6) stored inside the client device (4) if said comparison results in a match or the image identifier (24) of the current version of the operating system image (6) is greater than the image identifier (22) of the different versions of the operating system image (12).

11. The method according to any of the claims from 8 to 10, wherein the information (8) about the current version of the operating system (6) further comprises a working status information (20) about the current version (6).

12. The method according to the claim 11, wherein determining the updated image version of said operating system image (6, 12) for said client device (4) by checking the working status (20) of the current version (6) and if said checking results in either a non-working current version operating system image, or absence of said current version operating system image (6), than comparing the information (8) of the current version (6) to the information (14) of the different versions (12).

13. The method according to the claim 12, wherein comparing the information (8, 14) by comparing the image identifiers (24) of current version (6) to the image identifier (22) of the different versions for determining and sending one of the different versions of the operating system image (12) whose image identifier (22) is either equal to the image identifier (24) of the current version (6) or whose image identifier (22) is greatest among the image identifiers (24) of the different versions (12).

14. The method according to any of the claims from 8 to 13, wherein sending the information (8) about the current version of the operating system image (6) embedded into a Dynamic Host Configuration Protocol (DHCP) option packet (28) from the client device (4) to the boot server (16).
